# EUROPEAN PATENT APPLICATION

(11) **EP 4 742 177 A1**
(43) Date of publication of application: **13.05.2026**
(21) Application number: 25214050.4
(22) Date of filing: 06.11.2025
(51) Int. Cl.: G06V 10/44, G06V 10/52, G06V 10/62, G06V 10/80, G06V 10/82, G06V 20/40, G06V 20/70

(54) **IMAGE PROCESSING METHOD, NON-TRANSITORY STORAGE MEDIUM, AND ELECTRONIC DEVICE**

(30) Priority: 06.11.2024 CN 202411580643
(71) Applicant: Beijing Zitiao Network Technology Co., Ltd., Beijing 100190 (CN); Lemon Inc., Grand Cayman, KY1-1205 (KY)
(72) Inventor: YANG, Li, Beijing, 100028 (CN); ZHAN, Gen, Beijing, 100028 (CN); ZHANG, Yabin, Los Angeles, 90066 (US); LIAO, Yiting, Los Angeles, 90066 (US); LI, Junlin, Los Angeles, 90066 (US)
(74) Representative: Marks & Clerk LLP

(57) **Abstract**

The present disclosure provides an image processing method, a non-transitory storage medium, and an electronic device. The image processing method includes: obtaining a frame group to be processed in a target video; and processing the frame group to be processed by a saliency prediction model to obtain a detection result of the target video frame. The saliency prediction model includes a feature encoder and a feature decoder. The processing the frame group to be processed by a saliency prediction model includes: inputting the frame group to be processed into the feature encoder to perform feature extraction, and outputting multi-layer feature data corresponding to the frame group to be processed; and inputting the multi-layer feature data into the feature decoder to perform feature fusion in a temporal dimension and feature fusion in a spatial dimension, and outputting a detection result of the target video frames.

## Description

### CROSS-REFERENCE TO RELATED APPLICATION

This application claims the priority to and benefits of the Chinese Patent Application No. 202411580643.8, which was filed on November 06, 2024. The aforementioned patent application is hereby incorporated by reference in its entirety.

### TECHNICAL FIELD

Embodiments of the present disclosure relate to image processing technology, and more particularly, to an image processing method, a non-transitory storage medium, and an electronic device.

### BACKGROUND

By a visual perception system, human beings may quickly locate a region of interest (ROI) in a video picture while watching the video. In order to enable computer systems to quickly perceive important objects in complex scenarios like humans, video saliency prediction tasks come into being. The video saliency information has important application value in many application scenarios.

At present, video saliency is generally identified by the bottom-up saliency prediction method or the top-down saliency prediction method. The bottom-up saliency prediction method is based on the characteristics of the video frame data itself, and uses the underlying features such as color, contrast and edge to select the regions in the scenario that are significantly compared with the surrounding regions, i.e., saliency regions. Top-down saliency prediction is based on human's "cognitive factors" as the premise, using knowledge-driven features to predict, such as face, car, moving objects in the video scenario as the main target of saliency region.

In the above-mentioned saliency prediction method, it depends on the manually designed features, which require expert knowledge and a large number of experiments to extract and adjust. The final features are not necessarily the features that generate the best saliency results, and there is a problem of poor recognition accuracy.

### SUMMARY

The present disclosure provides an image processing method, a non-transitory storage medium, and an electronic device, so as to reduce dependence on manual knowledge and improve the accuracy of image saliency recognition results.

Embodiments of the present disclosure provide an image processing method, which includes:
obtaining a frame group to be processed in a target video, the frame group to be processed including target video frame and contextual video frames of the target video frame, where the contextual video frames include at least one first video frame preceding the target video frame and at least one second video frame succeeding the target video frame in the target video, a plurality of video frames in the frame group to be processed are continuous video frames; and
processing the frame group to be processed by a saliency prediction model to obtain a detection result of the target video frame, the detection result representing a region of interest in the target video frame,
where the saliency prediction model includes a feature encoder and a feature decoder, and the processing the frame group to be processed by a saliency prediction model includes:
inputting the frame group to be processed into the feature encoder to perform feature extraction, and outputting multi-layer feature data corresponding to the frame group to be processed, where the multi-layer feature data includes layer feature data respectively output by a plurality of preset processing blocks of the feature encoder, and each of the layer feature data includes feature data of a plurality of video frames in the frame group to be processed; and
inputting the multi-layer feature data into the feature decoder to perform feature fusion in a temporal dimension and feature fusion in a spatial dimension, and outputting the detection result of the target video frames.

Embodiments of the present disclosure provide an image processing apparatus, which includes:
a frame group to be processed obtaining module, which is configured for obtaining a frame group to be processed in a target video, the frame group to be processed including target video frame and contextual video frames of the target video frame, where the contextual video frames include at least one first video frame preceding the target video frame and at least one second video frame succeeding the target video frame in the target video, a plurality of video frames in the frame group to be processed are continuous video frames;
a prediction module, configured for processing the frame group to be processed by a saliency prediction model to obtain a detection result of the target video frame, the detection result representing a region of interest in the target video frame,
where the saliency prediction model includes a feature encoder and a feature decoder,

The prediction module is configured for inputting the frame group to be processed into the feature encoder to perform feature extraction, and outputting multi-layer feature data corresponding to the frame group to be processed, where the multi-layer feature data includes layer feature data respectively output by a plurality of preset processing blocks of the feature encoder, and each of the layer feature data includes feature data of a plurality of video frames in the frame group to be processed; and inputting the multi-layer feature data into the feature decoder to perform feature fusion in a temporal dimension and feature fusion in a spatial dimension, and outputting the detection result of the target video frame.

Embodiments of the present disclosure provide an image processing apparatus, which includes:
one or more processors; and
a storage device configured for storing one or more programs,
when the one or more programs are executed by the one or more processors, the one or more processors are caused to implement the image processing method according to any of the embodiments of the disclosure.

Embodiments of the present disclosure provide a non-transitory storage medium including computer-executable instructions, when executed by a computer processor, performing the image processing method according to any of the embodiments of the disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a schematic flow chart of an image processing method according to an embodiment of the present disclosure;
Fig. 2 is a schematic structural diagram of a saliency prediction model according to an embodiment of the present disclosure;
Fig. 3 is a structurally schematic diagram of a temporal attention module according to an embodiment of the present disclosure;
Fig. 4 is a schematic structural diagram of a saliency prediction model according to an embodiment of the present disclosure;
Fig. 5 is a structurally schematic diagram of an image processing apparatus according to an embodiment of the present disclosure;
Fig. 6 is a schematic block diagram of an electronic device according to an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of messages or information exchanged between a plurality of apparatuses in the embodiments of the present disclosure are used for illustrative purposes only, and are not indicated to limit the scope of these messages or information.

It may be understood that before using the technical solutions disclosed in the embodiments of the present disclosure, the types, scope of use, and usage scenarios of personal information involved in the present disclosure and the like shall be informed to the user and the user's authorization shall be obtained in an appropriate manner in accordance with relevant laws and regulations.

For example, when receiving an active request from a user, a prompt message is sent to the user to explicitly prompt the user that an operation requested by the user will need to obtain and use the user's personal information. In this way, the user can choose whether to provide personal information to a software or hardware such as an electronic device, an application, a server, or a storage medium that performs the operation of the technical solution of the present disclosure according to the prompt message.

As an optional but non-limiting implementation, in response to receiving an active request from a user, the prompt message may be sent to the user in the form of a pop-up window, and the prompt message may be presented in the pop-up window in the form of text. In addition, the pop-up window may also carry a selection control for the user to select "agree" or "disagree" to provide personal information to the electronic device.

It may be understood that the above process of notifying and obtaining user authorization is only schematic, and does not limit the implementation of the present disclosure. Other manners that meet relevant laws and regulations may also be applied to the implementation of the present disclosure.

It may also be understood that the data (including but not limited to the data itself, data acquisition, or use) involved in the technical solutions of the present disclosure shall comply with the requirements of the corresponding laws, regulations, and related provisions.

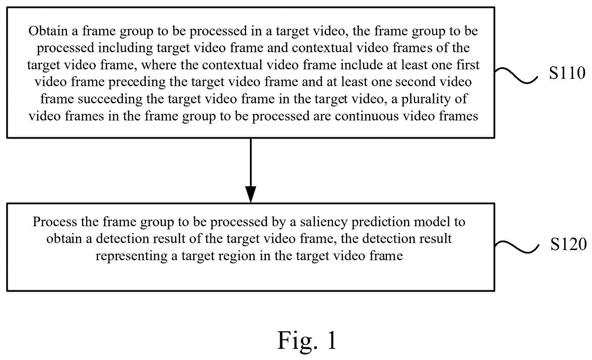

Fig. 1 is a schematic flow diagram of an image processing method according to an embodiment of the present disclosure. The embodiment of the present disclosure is applicable to the case where saliency prediction is performed on a video frame by means of in-depth learning. The method may be executed by an image processing apparatus. The apparatus may be realized in the form of software and/or hardware, alternatively, an electronic device. The electronic device may be a mobile terminal, a PC end or a server, etc.

As shown in Fig. 1, the method includes steps S110 and S120.

At step S110, obtain a frame group to be processed in a target video, the frame group to be processed including target video frame and contextual video frames of the target video frame, where the contextual video frames include at least one first video frame preceding the target video frame and at least one second video frame succeeding the target video frame in the target video, a plurality of video frames in the frame group to be processed are continuous video frames; and

At step S120, process the frame group to be processed by a saliency prediction model to obtain a detection result of the target video frame, the detection result representing a region of interest in the target video frame.

In the present embodiment, the performing saliency prediction on a target video frame in a target video may be understood as predicting a visual focus area of a user in the target video frame, which is an area of interest of the user in the target video frame.

The target video frame may be any video frame in the target video, among others. The saliency prediction of the target video may be understood as a saliency prediction of a plurality of target video frames in a multi-target video. Accordingly, a detection result of the target video is formed based on the detection results of the plurality of target video frames. Here, the target video may be videos of different scenarios. For example, the target video may be a video of a transmission scenario, and the target video may be a video to be transmitted. The bitrate information about the video to be transmitted is set by determining a detection result of the video to be transmitted. The video to be transmitted is transmitted based on the bitrate information. For example, the target video may be a video of a question-and-answer scenario. The target recognition may be a video acquired in real time by a question-and-answer device, or a video uploaded or selected by a user. Feedback information about the question-and-answer scenario is generated by the detection result of the target video. For example, the target video may be a video of a text editing scenario. The target video may be a video uploaded or selected by a user. Text information is generated by the detection result of the target video, and the text information may be description information or abstract information about the target video, etc. For example, the target video may be a video of an automatic driving scenario, which is acquired in real time by an automatic driving vehicle. An automatic driving instruction is generated by simulating a driver's visual region of interest in the driving scenario by the detection result of the target video.

In any of the above-mentioned scenarios, a target video frame is determined from a target video, where the target video frame may be determined according to a selection operation of a user. The target video frame may also be selected from the target video according to a pre-set sampling rule. For example, the pre-set sampling rule may be a sampling rule based on a pre-set interval duration; or, the pre-set sampling rule may include a pre-set video frame number. Alternatively, the preset sampling rule may also be to determine a target video frame based on a video scenario of the target video. For example, the target video may correspond to one or more video scenarios, and one or more target video frames may be determined in a local video frame corresponding to each video scenario. Here, the video scenario may include, but is not limited to, an outdoor scenario such as a road scenario and a bridge scenario, and an indoor scenario such as a coffee shop scenario and a gymnasium scenario, and the like, and may be detected based on a preset machine learning model.

The context video frame of the target video frame may be understood as a video frame in the target video that has a temporal relationship to the target video frame, and may be, for example, a video frame that precedes and/or follows the target video frame. For example, the context video frame of the target video frame may include a plurality of video frames, and may include at least one first video frame of the target video preceding the target video frame and at least one second video frame succeeding the target video frame. Exemplarily, the context video frame of the target video frame includes m first video frames preceding the target video frame and n second video frames succeeding the target video frame. m and n may be the same or different. It will be appreciated that in response to that the number of video frames preceding/succeeding the target video frame in the target video does not satisfy the number of context video frames, it may be complemented by a blank video frame.

Alternatively, the frame group to be processed may include a pre-set number of video frames. The plurality of video frames in the frame group to be processed may be continuous video frames, and the target video frame may be an intermediate video frame of the plurality of video frames in the frame group to be processed. That is, the time stamp of the target video frame is located at an intermediate time stamp of the time stamps respectively corresponding to the plurality of video frames in the frame group to be processed. In response to perform saliency prediction on a target video frame, a context video frame of the target video frame and the target video frame are formed into a frame group to be processed, where the context video frame provides context information for the target video frame, and provides auxiliary information for the saliency prediction process of the target video frame, so as to improve the accuracy of saliency prediction of the target video frame.

In the present embodiment, a group of frames to be processed is processed by a pre-trained saliency prediction model to obtain a detection result of a target video frame, and the detection result represents a region of interest in the target video frame, where the region of interest may be understood as a visual focus area in the target video frame, namely, an area of interest of a user in the target video frame. Herein, the test result may be in the form of a saliency map. The saliency map may be a greyscale image. The greyscale value of a pixel in the saliency map is indicative of the degree of saliency of the pixel. Exemplarily, in the saliency map, the grayscale value of a pixel is used to represent the saliency of that pixel: the stronger the saliency of the pixel, the higher the user's attention to that pixel. Alternatively, a region composed of pixel points in the saliency map with a gray value greater than a pre-set value is determined as the region of interest. The region of interest in the saliency map may be one or more. Alternatively, the region in the saliency map in which the maximum gray value is located is determined as the region of interest. For example, a region segmentation may be performed on a target video frame to obtain various candidate regions, and the candidate region where the maximum gray value in the saliency map is located is determined as a region of interest. For example, in response to that the target video frame is a portrait video frame, the region of interest may be a human face region.

The saliency prediction model may be a neural network model, and the saliency prediction model includes a feature encoder and a feature decoder. The feature decoder is connected to the feature encoder. A frame group to be processed is input to the above-mentioned feature encoder. The frame group to be processed is processed by the feature encoder and the feature decoder to obtain a detection result of a target video frame. Alternatively, the processing the frame group to be processed by a saliency prediction model includes: inputting the frame group to be processed into the feature encoder to perform feature extraction, and outputting multi-layer feature data corresponding to the frame group to be processed, where the multi-layer feature data includes layer feature data respectively output by a plurality of preset processing blocks of the feature encoder, and each of the layer feature data includes feature data of a plurality of video frames in the frame group to be processed; and inputting the multi-layer feature data into the feature decoder to perform feature fusion in a temporal dimension and feature fusion in a spatial dimension, and outputting a detection result of the target video frame.

The feature encoder is configured for performing feature extraction respectively on a plurality of video frames in the frame group to be processed. The feature encoder includes a plurality of processing blocks, each processing block being connected in turn, with the output feature data of a previous processing block serving as an input to a subsequent processing block, and so on. The feature data extracted by a plurality of processing blocks of a feature encoder may be different from each other. For example, a processing block located at the front end of the feature encoder may be used to extract contour feature data in a video frame. A processing block located at the middle end of the feature encoder may be used to extract detail feature data in a video frame. A processing block located at the end of the feature encoder may be used to extract semantic feature data in a video frame. Herein, each processing block in the feature encoder respectively performs feature extraction on a plurality of video frames in a frame group to be processed. Accordingly, the frame group to be processed is input to the feature encoder to perform feature extraction, and multi-layer feature data corresponding to the frame group to be processed is output, the steps including: inputting a frame group to be processed into a first processing block of a feature encoder to obtain first-layer feature data, inputting the first-layer feature data into a second processing block to obtain second-layer feature data, inputting the second-layer feature data into a third processing block to obtain third-layer feature data, and so on, until a last processing block outputs last-layer feature data.

In the present embodiment, multi-layer feature data is respectively extracted from a plurality of video frames in the frame group to be processed by a feature encoder, and the multi-layer feature data includes layer feature data respectively output by a plurality of preset processing blocks of the feature encoder. Herein, at least one processing block in the plurality of processing blocks is the preset processing block. For example, in order to improve the diversity of feature data, the number of preset processing blocks is at least two. Alternatively, the layer feature data respectively output by a plurality of preset processing blocks in the feature encoder is formed into multi-layer feature data, and the multi-layer feature data is understood to be feature data at different levels obtained during the extraction process of the frame group to be processed by the feature encoder, and for example, may include one or more items of contour feature data, detail feature data and semantic feature data. The multi-layer feature data is extracted by the feature encoder to improve the comprehensiveness of the feature data and provide a comprehensive data basis for the processing of the feature decoder.

Alternatively, the pre-set processing blocks include at least one intermediate processing block and a last processing block. The layer feature data output by each intermediate processing block may be intermediate feature data generated by a feature extraction process of a feature encoder on a frame group to be processed, such as contour feature data and detail feature data at different levels. The layer feature data output by the last processing block may be semantic feature data.

In this embodiment, a plurality of processing blocks in the feature encoder are connected in series and correspond to sequence numbers based on their order of connection, e. g., a first processing block and a second processing block, etc. The number of the preset processing blocks and the serial number of the preset processing blocks are not limited, and may be set according to requirements. In some embodiments, the number of the predetermined processing blocks and the sequence number of the predetermined processing blocks may be obtained through recognition of saliency prediction performance. Alternatively, different initial saliency prediction models are created on the basis of the number of different preset processing blocks and the serial number of the preset processing blocks. Exemplarily, taking a saliency prediction model that includes 23 processing blocks as an example, the feature encoder in the initial saliency prediction model 1 extracts multi-layer feature data corresponding to the third, twenty-fifth and twenty-third processing blocks, the feature encoder in the initial saliency prediction model 2 extracts multi-layer feature data corresponding to the fifth, eleventh, seventeenth and twenty-third processing blocks, and so on to create n initial saliency prediction models. The n initial saliency prediction models differ in the multi-layer feature data extracted by the feature encoder for the different processing blocks. the n initial saliency prediction models are trained respectively based on the sample data set to obtain n saliency prediction models, performance evaluation on the n saliency prediction models is performed, and a final saliency prediction model is determined based on the performance evaluation results of the n saliency prediction models. By evaluating the performance of multiple saliency prediction models, the preset processing block in the feature encoder is determined, which may improve the accuracy of the extracted multi-layer feature data and further improve the accuracy of the detection results. Exemplarily, the preset processing blocks may include the fifth, eleventh, seventeenth, and twenty-third processing blocks in the feature encoder, with the understanding that five, eleven, seventeenth, and twenty-third, etc. are the sequence numbers of the processing blocks, respectively.

Alternatively, the feature encoder includes a visual model (vision Transformer, ViT), and the multi-layer feature data are feature data respectively output by preset processing blocks in the visual model. Exemplarily, the multi-layer feature data may include multi-layer feature data respectively corresponding to the fifth, the eleventh, the seventeenth and the twenty-third processing blocks in the visual model.

In the embodiments described above, each layer feature data includes feature data for the plurality of video frames, the feature data for the plurality of video frames in each layer feature data having a temporal relationship to provide temporal information for subsequent processing by the feature decoder.

Alternatively, the feature decoder is used for fusing feature data of the plurality of video frames in each of the layer feature data in a temporal dimension to obtain a plurality of layer fusion feature data; and fusing the multi-layer fusion feature data in a spatial dimension to obtain target fusion feature data, predicting and obtaining a detection result of the target video frame based on the target fusion feature data. The detection result represents a region of interest in the target video frame.

Each layer feature data includes feature data of a plurality of video frames, and there is a temporal relationship between the feature data of different video frames. By fusing the feature data of the plurality of video frames in the layer feature data in the temporal dimension, the temporal information in the layer feature data may be captured. The layer fusion feature data is obtained, for example, by weighting feature data of a plurality of video frames in the layer feature data. The respective weights corresponding to the feature data of the plurality of video frames may be learned based on the feature decoder. The different layer fusion feature data is obtained by fusing the layer feature data of different levels respectively.

Alternatively, the spatial scales of the different layer fusion feature data are different, and spatial information between the layers feature data is captured by fusing the layer fusion feature data of different spatial scales in the spatial dimension. For example, a plurality of layer fusion feature data may be successively spliced to obtain target fusion feature data.

The feature decoder obtains the target fusion feature data by understanding the temporal information and spatial information of the multi-layer feature data, and obtains the detection result of the target video frame based on the target fusion feature data.

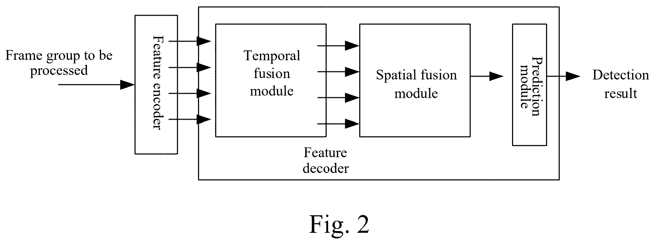

Exemplarily, with reference made to Fig. 2, it is a schematic structural diagram of a saliency prediction model according to an embodiment of the present disclosure. The feature decoder in Fig. 2 includes a temporal fusion module, a spatial fusion module and a prediction module. The temporal fusion module is used for performing temporal dimension fusion respectively on multi-layer feature data output by the feature decoder to obtain multi-layer fusion feature data. The spatial fusion module is used for fusing the multi-layer fusion feature data in the spatial dimension to obtain target fusion feature data. The prediction module is used for predicting and obtaining a detection result of the target video frame based on the target fusion feature data, and the detection result represents a region of interest in the target video frame. Accordingly, the inputting the multi-layer feature data into the feature decoder to perform feature fusion in a temporal dimension and feature fusion in a spatial dimension, and outputting a detection result of the target video frame, includes: inputting the multi-layer feature data into the temporal fusion module to perform temporal dimension fusion, and outputting the multi-layer fusion feature data. The multi-layer fusion feature data is input into a spatial fusion module to perform spatial dimension fusion, and output target fusion feature data. The target fusion feature data is input to the prediction module so as to output a detection result of the target video frame. The specific structures of the temporal fusion module, the spatial fusion module and the prediction module are not defined herein, and may be set according to the requirements of model construction.

The technical solution according to present embodiment provides sufficient context information for the target video frame based on the context video frame of the target video frame during the saliency prediction of the target video frame by the saliency prediction model, provides auxiliary information for the saliency prediction process of the saliency prediction model, and improves the accuracy of the saliency prediction of the target video frame by the saliency prediction model. Furthermore, in the saliency prediction model, the multi-layer feature data of the group of frames to be processed is extracted by the feature encoder to provide the comprehensiveness of the feature data. By fusing the multi-layer feature data in both temporal dimension and spatial dimension, the temporal information and spatial information of the multi-layer feature data may be captured. This enhances the understanding of features in the frame group to be processed across both temporal and spatial dimensions, allowing for better alignment with the human visual perception system and improving the accuracy of detection results.

In some embodiments, the feature decoder includes a temporal attention module, and the temporal attention module is connected to an output end of the feature encoder. Namely, the temporal attention module is connected to an output end of a last processing block in the feature decoder, and the layer feature data output by the last processing block is used as input of the temporal attention module. Alternatively, the method further includes inputting layer feature data output by the output end of the feature encoder to the temporal attention module, and outputting temporal weight data, where the temporal weight data is configured for fusing feature data of the plurality of video frames in each of the layer feature data in a temporal dimension. The temporal weight data may be the weight of the feature data of a plurality of video frames in the layer feature data, and may represents the importance of the plurality of video frames. The higher the weight of the video frame, the higher the importance of the video frame is represented. By way of example, a preset number p of video frames are included in a frame group to be processed. Accordingly, the temporal weight data includes weights respectively corresponding to p video frames, and a weight value in the temporal weight data has a temporal corresponding relationship with each video frame in the frame group to be processed. For example, a jth weight value in the temporal weight data is a weight of a jth video frame in the frame group to be processed.

With regard to any layer feature data output by the feature encoder, weighting processing is performed on the feature data respectively corresponding to a plurality of video frames in the layer feature data and a plurality of weight values in the temporal weight data to obtain layer fusion feature data corresponding to the layer feature data. For example, for the layer feature data respectively output by the fifth, eleventh, seventeenth and twenty-third processing blocks of the feature encoder, the layer feature data output by the twenty-third processing block is input to a temporal attention module to output temporal weight data. The layer feature data output by each preset processing block (namely, the layer feature data output respectively by the fifth, eleventh, seventeenth and twenty-third processing blocks) is respectively subject to weighting processing in a temporal dimension on the basis of the temporal weight data so as to obtain corresponding layer fusion feature data.

Alternatively, the temporal attention module includes a plurality of three-dimensional convolution blocks, a reshape layer, and a mean processing layer. Herein, a plurality of three-dimensional convolution blocks successively perform convolution processing on the last layer feature data output by the feature encoder. The reshape layer changes the shape of the input tensor without changing its data. In a neural network model, the data may be transformed from one dimension to another by the reshape layer to facilitate the docking between different layers. In this embodiment, the output data of the three-dimensional convolution block is converted into data of a processable dimension of the mean processing layer by the reshape layer linking the three-dimensional convolution block and the mean processing layer. The mean processing layer performs mean processing on the data converted by the reshape layer to obtain the temporal weight data.

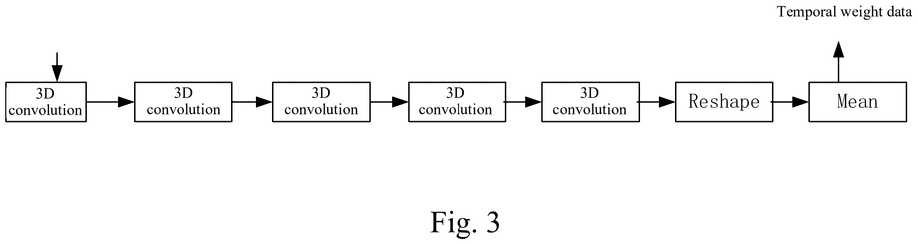

Exemplarily, with reference made to Fig. 3, Fig. 3 is a structurally schematic diagram of a temporal attention module according to an embodiment of the present disclosure. Five three-dimensional convolution blocks are included in Fig. 3, here by way of example only. The number of three-dimensional convolution blocks in the temporal attention module may be determined according to the number of channels of the layer feature data.

In the above-mentioned embodiment, the channel dimensions of the feature data of multiple layers output by the feature encoder are consistent with the time-spatial scale. To enhance the model's ability to understand the context of the feature data of the frame group to be processed, a feature up-sampling module is set up to obtain feature data of different spatial scales. Correspondingly, the channel dimension and time scale remain unchanged.

Alternatively, a feature up-sampling module is connected to the at least one intermediate processing block of the feature encoder. Accordingly, the feature up-sampling module performs up-sampling processing on the layer feature data output by the at least one intermediate processing block. Accordingly, the processing procedure of the feature decoder further includes: inputting the layer feature data output by the at least one intermediate processing block to the up-sampling module for up-sampling processing, and outputting the layer feature data that are up-sampled, where spatial scales of each of the layer feature data that are up-sampled are different. Herein, the feature up-sampling module performs up-sampling processing of different multiples on different layer feature data. Correspondingly, the spatial scales of the obtained layer feature data after each up-sampling processing are different. Exemplarily, the up-sampling multiples may be 2 times, 4 times, and 8 times, etc. The sequence number of the processing block corresponding to the layer feature data is negatively correlated with the sampling multiple of the layer feature data. The larger the sequence number of the processing block corresponding to the layer feature data is, the smaller the sampling multiple of the layer feature data is. The layer feature data output by the last processing block is not subjected to up-sampling processing.

Take the layer feature data respectively output by the fifth, the eleventh, the seventeenth and the twenty-third processing blocks as an example. The layer feature data output by the fifth processing block may be up-sampled by 8 times. The layer feature data output by the eleventh processing block may be up-sampled by 4 times. The layer feature data output by the seventeenth processing block may be up-sampled by 2 times. The layer feature data output by the twenty-third processing block may not be up-sampled. Different spatial scales of layer feature data are obtained by up-sampling processing. The multi-spatial scales of layer feature data are helpful to capture the context information in the video frame, and facilitate the subsequent feature fusion process to obtain a more compact feature representation.

In some embodiments, the processing procedure of the feature decoder includes: inputting the layer feature data output by the at least one intermediate processing block to the up-sampling module for up-sampling processing, and outputting the layer feature data that are up-sampled. The layer feature data output by the last processing block is input to the temporal attention module to output temporal weight data. Based on the temporal weight data, the layer feature data after each up-sampling process are fused in the temporal dimension respectively to obtain layer fusion feature data, with different spatial scales among these layer fusion feature data.

In some embodiments, the layer feature data output by the last processing block is input to the temporal attention module to output temporal weight data. Each layer feature data output by the feature encoder is respectively fused in a temporal dimension based on the temporal weight data to obtain initial layer fusion feature data, and the spatial scale of each initial layer fusion feature data is the same. The initial layer fusion feature data is input into a feature up-sampling module for up-sampling processing to obtain layer fusion feature data of different spatial scales. The up-sampling processing of different sampling multiples is respectively performed on each initial layer fusion feature data to obtain layer fusion feature data of different spatial scales.

On the basis of the above-mentioned embodiment, the feature decoder further includes a progressive fusion module, where the progressive fusion module is consistent with the function of the spatial fusion module in the above-mentioned embodiment, so as to perform fusion processing in spatial dimension on of multiple layer fusion feature data.

Alternatively, the progressive fusion module includes a plurality of fusion blocks. Each of the fusion blocks includes a 3D convolution layer and an up-sampling layer, where the 3D convolution is used to perform a convolution process on input feature data so as to reduce the number of channels and the number of video frames of the input feature data. The up-sampling layer is used for up-sampling the input feature data so as to improve the spatial scale of the input feature data. The input feature data of the 3D convolution layer and the up-sampling layer may be layer fusion feature data, or may also be spatial fusion feature data processed by the last fusion block.

The feature data at a first spatial scale is input to the fusion block pair to perform convolution processing and up-sampling processing so as to output up-sampled data, where the up-sampled data is feature data of a second spatial scale; fusion processing is performed on the up-sampled data and the layer fusion feature data of the second spatial scale to obtain spatial fusion feature data. The feature data at the first spatial scale includes layer fusion feature data at the first spatial scale, or, spatial fusion feature data at the first spatial scale. Here, the first spatial scale is smaller than the second spatial scale.

The progressive fusion module includes a plurality of fusion blocks. The convolution processing and up-sampling processing are performed on layer fusion feature data of a minimum spatial scale (namely, feature data of a first spatial scale) via a first fusion block to obtain first up-sampled data. The first up-sampled data is fused with layer fusion feature data at a previous spatial scale (namely, layer fusion feature data at a second spatial scale) to obtain first spatial fusion feature data. The convolution processing and up-sampling processing are performed on first spatial fusion feature data (namely, feature data at a new first spatial scale) via a second fusion block to obtain second up-sampled data. The fusion processing is performed on the second up-sampled data and layer fusion feature data at the previous spatial scale (namely, layer fusion feature data at a new second spatial scale) to obtain second spatial fusion feature data, and so on, until the spatial fusion feature data corresponding to the last the fusion block of the progressive fusion module is target fusion feature data.

Taking the layer feature data respectively output by the fifth, the eleventh, the seventeenth and the twenty-third processing blocks as an example, accordingly, four layer feature data correspond to four layer fusion feature data. The spatial scales of the layer fusion feature data corresponding to the fifth, the eleventh, the seventeenth and the twenty-third processing blocks respectively decrease successively. Here, the layer fusion feature data corresponding to the ith processing block may be the layer fusion feature output by the ith processing block, and the layer fusion feature data is obtained by the up-sampling processing and the temporal dimension fusion processing. The progressive fusion module includes three fusion blocks, performing convolution processing and up-sampling processing on the layer fusion feature data corresponding to the twenty-third processing block via the first fusion block to obtain first up-sampled data, and performing fusion processing on the first up-sampled data and the layer fusion feature data corresponding to the seventeenth processing block to obtain first spatial fusion feature data. The convolution processing and up-sampling processing are performed on the first spatial fusion feature data via the second fusion block to obtain second up-sampled data, and the fusion processing is performed on the second up-sampled data and the layer fusion feature data corresponding to the eleventh processing block to obtain second spatial fusion feature data. The third fusion block performs convolution processing and up-sampling processing on the second spatial fusion feature data to obtain third up-sampled data, and performs fusion processing on the third up-sampled data and the layer fusion feature data corresponding to the fifth processing block to obtain target fusion feature data.

Alternatively, the fusion processing of the up-sampled data and the spatial fusion feature data in any fusion block in the progressive fusion module may be a feature concatenation in a channel dimension.

On the basis of the embodiments described above, the feature decoder includes a prediction module, the prediction module including an up-sampling block and a 2D convolution block connected in sequence; the target fusion feature data is input to the prediction module so as to output a detection result of the target video frame; and a detection result having the same size as the target video frame is obtained by a prediction model.

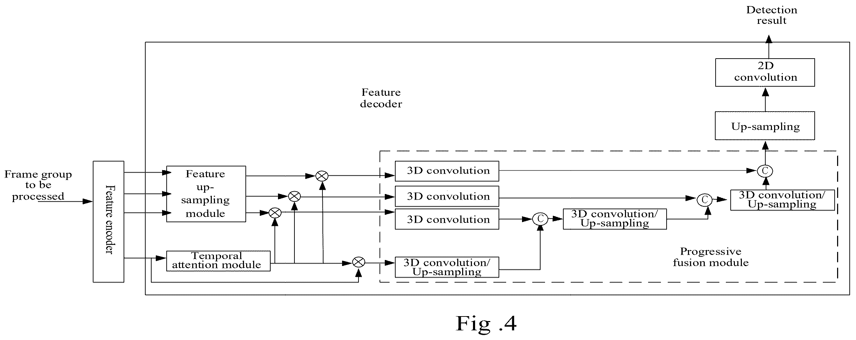

Exemplarily, with reference made to Fig. 4, it is a schematic structural diagram of a saliency prediction model according to an embodiment of the present disclosure. The group of frames to be processed is input to a feature encoder of the saliency prediction model. The feature encoder outputs a plurality of layer feature data, for example, the layer feature data respectively output by the fifth, eleventh, seventeenth and twenty-third processing blocks. Herein, other layer feature data except the last layer feature data is input to a feature up-sampling module, and the feature up-sampling module respectively performs up-sampling processing at different sampling multiples on the input layer feature data. The sampling multiples of the layer feature data are negatively correlated with the layer level of the layer feature data (or a serial number of a processor), and the layer level of the layer feature data is positively correlated with the serial number of a processing block. The feature up-sampling module outputs layer feature data of different spatial scales.

The layer feature data output by the last processing block of the feature encoder is input to the temporal attention module, and the temporal attention module obtains temporal weight data based on the input layer feature data, and performs weighting processing on each layer feature data via the temporal weight data to obtain multiple layer fusion feature data, so as to realize the fusion of temporal dimensions.

The 3D convolution/up-sampling block in the progressive fusion module is the fusion block in the above-mentioned embodiment. The convolution processing and up-sampling processing are performed on the fusion feature data of the last layer, and the up-sampled data and the fusion feature data of the previous layer are spliced in channel dimensions, and so on until the target fusion feature data is obtained, so as to realize the fusion of spatial dimensions. The fusion feature data of other layers except the last level is convolved by a 3D convolution block before being fused in the spatial dimension so as to reduce the number of channels and the number of video frames so as to facilitate the subsequent fusion processing.

The saliency prediction module further includes an up-sampling block and a 2D convolution block, where the up-sampling block and the 2D convolution block form a prediction model, and the detection result is obtained by processing target fusion feature data.

In the technical solution of the embodiments of the present disclosure, layer feature data at different spatial scales is obtained by setting the feature up-sampling module. The temporal weight data is determined by setting a temporal attention module, so as to realize the fusion of layer feature data in a temporal dimension. The spatial dimension fusion is performed on layer fusion feature data at different scales by a progressive fusion module. The saliency prediction model provided in this embodiment can perform fusion processing of temporal dimension and spatial dimension on layer feature data at different levels, so as to extract spatial information and temporal information, improve the understanding ability of context information in the frame group to be processed, and improve the accuracy of saliency prediction.

In the above embodiment, the saliency prediction model is trained from the sample frame group and the saliency tag map corresponding to the sample frame group. Alternatively, the saliency tag map may be obtained by manual tagging. Alternatively, the saliency tag map may be obtained by MLLM (Multimodal Large Language Model), which can process text, speech, image and other information at the same time, and may better understand the semantic content in the image video. The sample frame group, the audio information and the text information corresponding to the sample frame group are processed by the multi-modal language large model to obtain the saliency tag map corresponding to the sample frame group. The sample frame group and the saliency tag map corresponding to the sample frame group are added to the sample data set, so as to simplify the processing process of the sample data set.

The initialized significance prediction model is iteratively trained by using the sample data set to obtain the trained significance prediction model.

On the basis of the above-mentioned embodiments, determining bitrate information about a target video frame and/or a target video where the target video frame is located may be realized based on the detection result of the target video frame.

Alternatively, bitrate information about the target video frame is determined based on the detection result of the target video frame. For example, a region of interest and a non-region of interest are determined according to a detection result of a target video frame. The non-region of interest is a region other than the region of interest in the target video frame, and first bitrate information about the region of interest and second bitrate information about the non-region of interest are set. The first bitrate information is greater than the second bitrate information. It may be that a region of pixel points having a gray value greater than a threshold value is determined as the region of interest. For example, a plurality of regions of interest can also be determined according to a detection result of a target video frame. Different regions of interest correspond to different user attention degrees. The bitrate information corresponding to each region of interest is determined according to the user attention degrees. The bitrate information may be positively related to the user attention degrees. A gray value range corresponding to each user attention degree may be set, and the user attention degree of each region is determined on the basis of the gray value range and the gray value of each pixel point in the detection result.

By setting different bit rate information for different regions in the target video frame, the target video frame meets the user's viewing needs in the display process, and the bit rate information of non-regions of interest is reduced, which is convenient for the transmission of the target video frame.

Alternatively, the target video includes one or more target video frames, and the bitrate information about each of the video frames in the target video is determined based on the detection result of at least one target video frame in the target video. For example, the target video frame is an interval video frame in the target video, an intermediate video frame is further included between two adjacent target video frames, and the detection result of the intermediate video frame is obtained by performing interpolation processing on the detection results of the two adjacent target video frames. The bitrate information about each video frame is determined based on the detection result of each video frame in the target video, so as to achieve the technical effect of taking into account the display effect and transmission efficiency of the video.

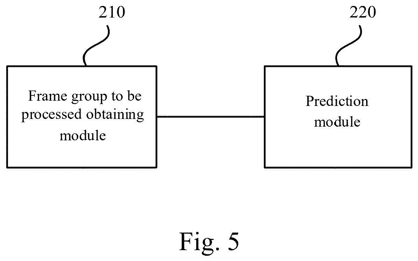

Fig. 5 is a structurally schematic diagram of an image processing apparatus according to an embodiment of the present disclosure. As shown in Fig. 5, the apparatus includes a frame group to be processed obtaining module 210 and a prediction module 220.

The frame group to be processed obtaining module 210 is configured for obtaining a frame group to be processed in a target video, the frame group to be processed including target video frame and contextual video frames of the target video frame, where contextual video frames includes at least one first video frame preceding the target video frame and at least one second video frame succeeding the target video frame in the target video, a plurality of video frames in the frame group to be processed are continuous video frames.

The prediction module 220 is configured for processing the frame group to be processed by a saliency prediction model to obtain a detection result of the target video frame, the detection result representing a region of interest in the target video frame.

The prediction module 220 is configured for inputting the frame group to be processed into the feature encoder to perform feature extraction, and outputting multi-layer feature data corresponding to the frame group to be processed, where the multi-layer feature data includes layer feature data respectively output by a plurality of preset processing blocks of the feature encoder, and each of the layer feature data includes feature data of a plurality of video frames in the frame group to be processed; and inputting the multi-layer feature data into the feature decoder to perform feature fusion in a temporal dimension and feature fusion in a spatial dimension, and outputting a detection result of the target video frame.

The technical solution provided by the present embodiment of the present disclosure provides sufficient context information for the target video frame based on the context video frame of the target video frame during the saliency prediction of the target video frame by the saliency prediction model, provides auxiliary information for the saliency prediction process of the saliency prediction model, and improves the accuracy of the saliency prediction of the target video frame by the saliency prediction model. Furthermore, in the saliency prediction model, the multi-layer feature data of the group of frames to be processed is extracted by the feature encoder to provide the comprehensiveness of the feature data. By fusing the temporal dimension and spatial dimension of the multi-layer feature data, the temporal information and spatial information of the multi-layer feature data may be captured, and the feature understanding of the temporal dimension and spatial dimension of the frame group to be processed may be improved, so as to fully fit the perception system of human vision and improve the accuracy of the detection results.

On the basis of the embodiment described above, alternatively, the feature encoder includes a visual model including a plurality of processing blocks, at least one processing block of the plurality of processing blocks is the preset processing block, and the plurality of preset processing blocks includes at least one intermediate processing block and a last processing block.

Alternatively, the feature decoder includes a feature up-sampling module connected to the at least one intermediate processing block of the feature encoder; and the prediction module 220 is further configured for inputting the layer feature data output by the at least one intermediate processing block to the up-sampling module for up-sampling processing, and outputting the layer feature data that are up-sampled, where spatial scales of each of the layer feature data that are up-sampled are different.

Alternatively, the feature decoder includes a temporal attention module connected to an output end of the feature encoder;
The prediction module 220 is also configured for inputting layer feature data output by the output end of the feature encoder to the temporal attention module, and outputting temporal weight data, where the temporal weight data is configured for fusing feature data of the plurality of video frames in each of the layer feature data in a temporal dimension.

Alternatively, the temporal attention module includes a plurality of three-dimensional convolution blocks, a reshape layer, and a mean processing layer.

Alternatively, the feature decoder includes a progressive fusion module, the progressive fusion module including a plurality of fusion blocks; each of the fusion blocks includes a 3D convolution layer and an up-sampling layer.

The prediction module 220 is further configured for inputting feature data of a first spatial scale is to the fusion block pair to perform convolution processing and up-sampling processing so as to output up-sampled data, where the up-sampled data is feature data of a second spatial scale; performing fusion processing on the up-sampled data and the layer fusion feature data of the second spatial scale to obtain spatial fusion feature data,
the feature data of the first spatial scale includes layer fusion feature data of the first spatial scale, or spatial fusion feature data of the first spatial scale; and
the spatial fusion feature data corresponding to a last fusion block of the progressive fusion module is target fusion feature data.

Alternatively, the feature decoder includes a prediction module, the prediction module including an up-sampling block and a 2D convolution block connected in sequence. The prediction module 220 is further configured for inputting the target fusion feature data to the prediction module so as to output a detection result of the target video frame.

On the basis of the embodiment described above, alternatively, the apparatus further includes:
a processing module, used for determining bitrate information about the target video frame based on the detection result of the target video frame; and/or determining bitrate information about each of the video frames in the target video based on a detection result of at least one of the target video frames in the target video.

An image processing apparatus according to an embodiment of the present disclosure may execute an image processing method provided by any embodiment of the present disclosure, and has functional modules and advantageous effects corresponding to the execution method.

It should be noted that the various units and modules included in the above-mentioned apparatus are merely divided according to functional logic, but are not limited to the above-mentioned division, as long as corresponding functions may be realized. In addition, the specific names of the functional units are merely for the convenience of distinguishing each other and are not intended to limit the scope of protection of the embodiments of the present disclosure.

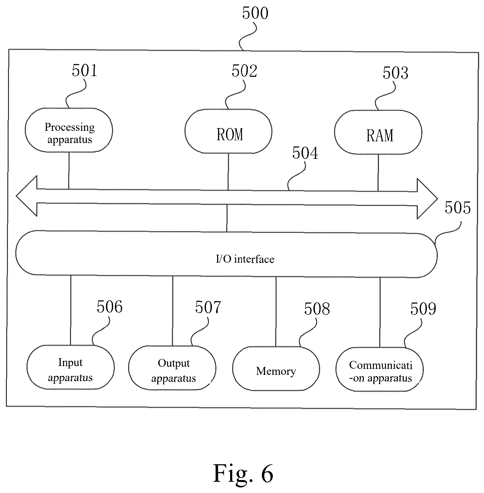

Fig. 6 is a schematic structural diagram of an electronic device according to an embodiment of the present disclosure. Referring to Fig. 6, Fig. 6 illustrates a schematic structural diagram of an electronic device (for example, a terminal device or a server) 500 suitable for implementing some embodiments of the present disclosure. The terminal devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in Fig. 6 is merely an example, and should not pose any limitation to the functions and the range of use of the embodiments of the present disclosure.

As illustrated in Fig. 6, the electronic device 500 may include a processing apparatus 501 (e.g., a central processing unit, a graphics processing unit, etc.), which can perform various suitable actions and processing according to a program stored in a read-only memory (ROM) 502 or a program loaded from a memory 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a memory 508 including, for example, a magnetic tape, a hard disk, or the like; and a communication apparatus 509. The communication apparatus 509 may allow the electronic device 500 to be in wireless or wired communication with other devices to exchange data. While Fig. 6 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the memory 508, or may be installed from the ROM 502. When the computer program is executed by the processing apparatus 501, the above-mentioned functions defined in the methods of some embodiments of the present disclosure are performed.

The names of messages or information exchanged between multiple devices in the embodiments of the present disclosure are for illustrative purposes only, and are not intended to limit the scope of such messages or information.

The electronic device provided in the embodiment of the present disclosure and the image processing method provided in the above embodiments belong to the same inventive concept. For technical details not described in detail in this embodiment, reference may be made to the above embodiments, and this embodiment has the same beneficial effects as the above embodiments.

The embodiment of the present disclosure provides a computer storage medium, on which a computer program is stored, and when the program is executed by a processor, the image processing method provided in the above embodiments is implemented.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: obtaining a frame group to be processed in a target video, the frame group to be processed including target video frame and contextual video frames of the target video frame, where the contextual video frames include at least one first video frame preceding the target video frame and at least one second video frame succeeding the target video frame in the target video, a plurality of video frames in the frame group to be processed are continuous video frames; processing the frame group to be processed by a saliency prediction model to obtain a detection result of the target video frame, the detection result representing a region of interest in the target video frame.

The saliency prediction model includes a feature encoder and a feature decoder, the processing the frame group to be processed by a saliency prediction model includes: inputting the frame group to be processed into the feature encoder to perform feature extraction, and outputting multi-layer feature data corresponding to the frame group to be processed, where the multi-layer feature data includes layer feature data respectively output by a plurality of preset processing blocks of the feature encoder, and each of the layer feature data includes feature data of a plurality of video frames in the frame group to be processed; and inputting the multi-layer feature data into the feature decoder to perform feature fusion in a temporal dimension and feature fusion in a spatial dimension, and outputting a detection result of the target video frame.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquisition unit can also be described as "a unit that acquires at least two Internet Protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims. Specific manners of operations performed by the modules in the apparatus in the above embodiment have been described in detail in the embodiments regarding the method, which will not be explained and described in detail herein again.

## Claims

1. An image processing method, comprising:
obtaining a frame group to be processed in a target video, the frame group to be processed comprising target video frame and contextual video frames of the target video frame, wherein the contextual video frames comprise at least one first video frame preceding the target video frame and at least one second video frame succeeding the target video frame in the target video, a plurality of video frames in the frame group to be processed are continuous video frames (S110); and
processing the frame group to be processed by a saliency prediction model to obtain a detection result of the target video frame, the detection result representing a region of interest in the target video frame (S120),
wherein the saliency prediction model comprises a feature encoder and a feature decoder, and
wherein the processing the frame group to be processed by a saliency prediction model, comprises:
inputting the frame group to be processed into the feature encoder to perform feature extraction, and outputting multi-layer feature data corresponding to the frame group to be processed, wherein the multi-layer feature data comprises layer feature data respectively output by a plurality of preset processing blocks of the feature encoder, and each of the layer feature data comprises feature data of a plurality of video frames in the frame group to be processed; and
inputting the multi-layer feature data into the feature decoder to perform feature fusion in a temporal dimension and feature fusion in a spatial dimension, and outputting the detection result of the target video frame.

2. The image processing method according to claim 1, wherein the feature encoder comprises a visual model comprising a plurality of processing blocks, at least one processing block of the plurality of processing blocks is the preset processing block, and the plurality of preset processing blocks comprises at least one intermediate processing block and a last processing block.

3. The image processing method according to claim 2, wherein the feature decoder comprises a feature up-sampling module connected to the at least one intermediate processing block of the feature encoder, and
wherein the method further comprises:
inputting the layer feature data output by the at least one intermediate processing block to the up-sampling module for up-sampling processing, and outputting the layer feature data that is up-sampled, wherein spatial scales of each of the layer feature data that is up-sampled are different.

4. The image processing method according to any of claims 1 to 3, wherein the feature decoder comprises a temporal attention module connected to an output end of the feature encoder, and
wherein the method further comprises inputting layer feature data output by the output end of the feature encoder to the temporal attention module, and outputting temporal weight data, wherein the temporal weight data is configured for fusing the feature data of the plurality of video frames in each of the layer feature data in a temporal dimension.

5. The image processing method according to claim 4, wherein the temporal attention module comprises a plurality of three-dimensional convolution blocks, a reshape layer, and a mean processing layer.

6. The image processing method according to any preceding claim, wherein the feature decoder comprises a progressive fusion module, the progressive fusion module comprising a plurality of fusion blocks, each of the fusion blocks comprises a 3D convolution layer and an up-sampling layer, and
wherein feature data of a first spatial scale is input to a fusion block pair to perform convolution processing and up-sampling processing so as to output up-sampled data, wherein the up-sampled data is feature data of a second spatial scale, fusion processing is performed on the up-sampled data and layer fusion feature data of the second spatial scale to obtain spatial fusion feature data,
wherein the feature data of the first spatial scale comprises layer fusion feature data of the first spatial scale, or spatial fusion feature data of the first spatial scale; and
wherein a spatial fusion feature data corresponding to a last fusion block of the progressive fusion module is target fusion feature data.

7. The image processing method according to claim 6, wherein the feature decoder further comprises a prediction module, the prediction module comprising an up-sampling block and a 2D convolution block connected in sequence, and
wherein the target fusion feature data is input to the prediction module so as to output the detection result of the target video frame.

8. The image processing method according to any preceding claim, further comprising:
determining bitrate information about the target video frame based on the detection result of the target video frame; and/or
determining bitrate information about each of the video frames in the target video based on a detection result of at least one of the target video frames in the target video.

9. An image processing apparatus, comprising:
a frame group to be processed obtaining module (210), configured for obtaining a frame group to be processed in a target video, the frame group to be processed including target video frame and contextual video frames of the target video frame, where the contextual video frame comprise at least one first video frame preceding the target video frame and at least one second video frame succeeding the target video frame in the target video, a plurality of video frames in the frame group to be processed are continuous video frames;
a prediction module (220), configured for processing the frame group to be processed by a saliency prediction model to obtain a detection result of the target video frame, the detection result representing a region of interest in the target video frame,
wherein the saliency prediction model comprises a feature encoder and a feature decoder, and
the prediction module (220) is configured for inputting the frame group to be processed into the feature encoder to perform feature extraction, and outputting multi-layer feature data corresponding to the frame group to be processed, wherein the multi-layer feature data comprises layer feature data respectively output by a plurality of preset processing blocks of the feature encoder, and each of the layer feature data comprises feature data of a plurality of video frames in the frame group to be processed; and inputting the multi-layer feature data into the feature decoder to perform feature fusion in a temporal dimension and feature fusion in a spatial dimension; and outputting the detection result of the target video frame.

10. The image processing apparatus according to claim 9, wherein the feature encoder comprises a visual model comprising a plurality of processing blocks, at least one processing block of the plurality of processing blocks is the preset processing block, and the plurality of preset processing blocks comprises at least one intermediate processing block and a last processing block.

11. The image processing apparatus according to claim 10, wherein the feature decoder comprises a feature up-sampling module connected to the at least one intermediate processing block of the feature encoder, and
wherein the method further comprises:
inputting the layer feature data output by the at least one intermediate processing block to the up-sampling module for up-sampling processing, and outputting the layer feature data that is up-sampled, wherein spatial scales of each of the layer feature data that is up-sampled are different.

12. The image processing apparatus according to any of claims 9 to 11, wherein the feature decoder comprises a temporal attention module connected to an output end of the feature encoder, and
wherein the method further comprises inputting layer feature data output by the output end of the feature encoder to the temporal attention module, and outputting temporal weight data, wherein the temporal weight data is configured for fusing the feature data of the plurality of video frames in each of the layer feature data in a temporal dimension.

13. The image processing apparatus according to claim 12, wherein the temporal attention module comprises a plurality of three-dimensional convolution blocks, a reshape layer, and a mean processing layer.

14. An electronic device (500), comprising:
one or more processors (501); and
a storage device (508) configured for storing one or more programs,
wherein when the one or more programs are executed by the one or more processors, the one or more processors are caused to implement the image processing method according to any of claims 1-8.

15. A non-transitory storage medium comprising computer-executable instructions for implementing the image processing method according to any of claims 1-8 when executed by a computer processor.
